(19) Europäisches Patentamt
European Patent Office
Office européen des brevets

(11) EP 2 316 881 A1

(12) **EUROPEAN PATENT APPLICATION**
published in accordance with Art. 153(4) EPC

(43) Date of publication:
**04.05.2011 Bulletin 2011/18**

(21) Application number: **09808252.2**

(22) Date of filing: **17.08.2009**

(51) Int Cl.:
***C08L 21/00*** *(2006.01)* ***C08K 3/06*** *(2006.01)*
***C08K 5/3477*** *(2006.01)* ***C08K 5/46*** *(2006.01)*
***C08L 61/06*** *(2006.01)* ***B60C 1/00*** *(2006.01)*
***B60C 15/06*** *(2006.01)* ***B60C 17/00*** *(2006.01)*

(86) International application number:
**PCT/JP2009/064413**

(87) International publication number:
**WO 2010/021316 (25.02.2010 Gazette 2010/08)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority: **19.08.2008 JP 2008210787**
**30.06.2009 JP 2009156329**

(71) Applicant: **Bridgestone Corporation**
**Tokyo 104-8340 (JP)**

(72) Inventor: **SATOU, Yoshitaka**
**Kodaira-shi**
**Tokyo 187-8531 (JP)**

(74) Representative: **Lamb, Martin John Carstairs**
**Marks & Clerk LLP**
**90 Long Acre**
**London**
**WC2E 9RA (GB)**

(54) **RUBBER COMPOSITION**

(57) It is to provide a high-elasticity rubber composition having a good workability while preventing the deterioration of fracture resistance of rubber and capable of reducing rubber burning as far as possible by using a vulcanization accelerator having a retarding effect equal to or more than that of the conventional vulcanization accelerator without using a retarder such as CTP possibly causing the deterioration of rubber properties after the vulcanization and problems such as blooming and the like. The rubber composition according to the invention is **characterized by** comprising a rubber component, a sulfenamide-based vulcanization accelerator represented by a formula (I), a phenolic resin, a methylene donor and sulfur.

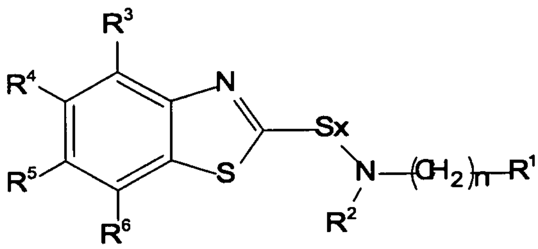

···( I)

EP 2 316 881 A1

## Description

[TECHNICAL FIELD]

This invention relates to a rubber composition containing a specified sulfenamide-based vulcanization accelerator, and more particularly to a rubber composition which can be preferably used in a bead filler of a tire for passenger car, truck, bus and motorcycle or as a side-reinforcing rubber for a run-flat tire.

[RELATED ART]

In rubber articles such as tires for automotives, conveyor belt, hoses and the like, it is desired to have various high properties in addition to the strength until now. Particularly, in case of using as a bead filler rubber or a side-reinforcing rubber for a run-flat tire, there is used a method of adding a phenolic resin for the purpose of attaining a high elasticity while suppressing the deterioration of fracture resistance of rubber.

For example, Patent Document 1 discloses a rubber composition compounded with a particular phenolic resin. In this case, it is possible to further enhance a high elasticity while more effectively suppressing the deterioration of fracture resistance.

On the other hand, there are frequently used composite materials formed by covering a metal reinforcement such as steel cords or the like with a rubber composition to reinforce rubber for improving the strength and durability. If it is intended to adhere the metal to rubber, there is known a method of simultaneously conducting the bonding between rubber and metal, i.e. a direct vulcanization adhesion method. In this case, it is useful to use a sulfenamide-based vulcanization accelerator giving a delayed effectiveness to vulcanization reaction for simultaneously conducting the vulcanization of rubber and the binding between rubber and metal. For example, among commercially available sulfenamide-based vulcanization accelerators, N,N'-dicyclohexyl-2-benzothiazolyl sulfenamide (hereinafter abbreviated as "DCBS") is currently known as a vulcanization accelerator most giving a delayed effectiveness to vulcanization reaction. When the delayed effectiveness is further required, the sulfenamide-based vulcanization accelerator is used together with a retarder such as N-(cyclohexylthio)phthalimide (hereinafter abbreviated as "CTP").

[PRIOR ART DOCUMENT]

[Patent Document]

[Patent Document 1] JP-A-2005-290321

[SUMMARY OF THE INVENTION]

[Problems to be solved by the invention]

However, there is still a room to be improved. For example, when the phenolic resin as mentioned above is compounded together with the conventional vulcanization accelerator, there is a tendency that good milling operation can not be attained because Mooney viscosity is excessively raised and hence it is considered that it is difficult to ensure a favorable Mooney scorch time simultaneously. Also, when the conventional vulcanization accelerator is used together with the retarder as mentioned above, it badly affects the physical properties of the vulcanized rubber depending on the amount of the retarder compounded, and results in problem causing the deterioration of the appearance in the vulcanized rubber and the blooming badly exerting on the adhesiveness.

It is, therefore, an object of the invention to provide a high-elasticity rubber composition having a good workability while preventing the deterioration of fracture resistance of rubber and capable of reducing rubber burning as far as possible by using a vulcanization accelerator having a retarding effect equal to or more than that of DCBS without using a retarder such as CTP possibly causing the deterioration of rubber properties after the vulcanization and problems such as blooming and the like.

[Means for solving problems]

The inventor has found a rubber composition which prevents the deterioration of fracture resistance of rubber and is capable of giving a good workability and a high elasticity while adopting a specified sulfenamide-based vulcanization accelerator for solving the above problems, and as a result the invention has been accomplished.

That is, the rubber composition of the invention is characterized by comprising a rubber component, a sulfenamide-based vulcanization accelerator represented by a formula (I), a phenolic resin, a methylene donor and sulfur.

[Chemical 1]

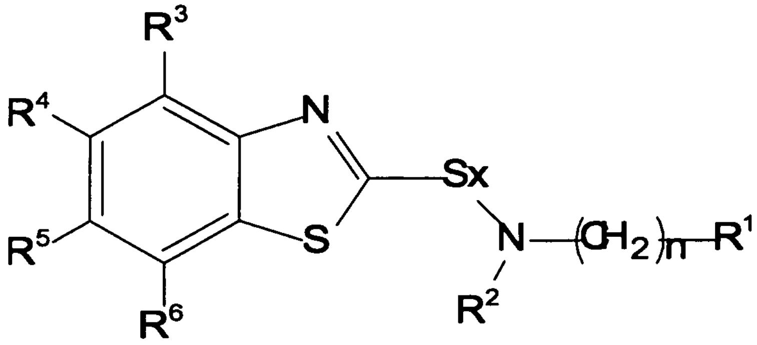

$\cdots$ (I)

(In the formula (I), $R^1$ is a branched alkyl group having a carbon number of 3-12, $R^2$ is a straight alkyl group having a carbon number of 1-10 or a branched alkyl group having a carbon number of 3-10, $R^3$-$R^6$ are independently a hydrogen atom, a straight alkyl group or alkoxy group having a carbon number of 1-4 or a branched alkyl group or alkoxy group having a carbon number of 3-4 and may be same or different, and n is 0 or 1 , and x is 1 or 2.)

It is desirable that the sulfenamide-based vulcanization accelerator is included in an amount of 0.1-10 parts by mass based on 100 parts by mass of the rubber component, and also it is desirable that the phenolic resin is included in an amount of 2-40 parts by mass.

Further, it is desirable that the methylene donor is included in an amount of 5-80 mass% in 100 mass% in total of the phenolic resin and methylene donor.

In the formula (I), $R^1$ and $R^2$ are preferable to be a branched alkyl group having a branching at $\alpha$-site. Also, it is preferable that $R^1$ is tert-butyl group and n is 0. Further, it is preferable that $R^1$ is tert-butyl group, $R^2$ is a straight alkyl group having a carbon number of 1-6 or a branched alkyl group having a carbon number of 3-6 and each of $R^3$-$R^6$ is a hydrogen atom. In addition, it is preferable that $R^1$ is tert-butyl group, $R^2$ is a straight alkyl group having a carbon number of 1-6 or a branched alkyl group having a carbon number of 3-6, each of $R^3$-$R^6$ is a hydrogen atom and n is 0. Furthermore, it is preferable that $R^1$ is tert-butyl group, $R^2$ is methyl group, ethyl group or n-propyl group, each of $R^3$-$R^6$ is a hydrogen atom and n is 0. Moreover, it is preferable that $R^1$ is tert-butyl group, $R^2$ is ethyl group, each of $R^3$-$R^6$ is a hydrogen atom and n is 0.

The methylene donor is preferable to be at least one selected from the group consisting of hexamethylene tetramine, hexamethoxymethyl melamine, paraformaldehyde, acetoaldehyde ammonia, $\alpha$-polyoxymethylene, a polyvalent methylol melamine derivative, an oxazolidine derivative and a polyvalent methylolated acetylene urea.

The phenolic resin is preferable to be at least one selected from the group consisting of a novolac type phenolic resin, a novolac type cresol resin, a novolac type xylenol resin, a novolac type resorcinol resin and a resin obtained by modifying these resin with an oil. The oil-modified resin is desirable to be a resin modified with at least one oil selected from the group consisting of rosin oil, tall oil, cashew nut oil, linoleic acid, oleic acid and linolenic acid.

The rubber composition is preferable to further contain a cobalt-based component made of cobalt element and/or a cobalt-containing compound. The content of the cobalt-based component is desirable to be 0.03-3 parts by mass as a cobalt quantity per 100 parts by mass of the rubber component. Also, the cobalt-containing compound may be a cobalt salt of an organic acid.

Further, the rubber component may comprise at least one of natural rubber and polyisoprene rubber, and not less than 50 mass% of natural rubber may be included in 100 mass% of the rubber component.

[Effect of the Invention]

According to the invention, a vulcanization accelerator having a retarding effect equal to or more than that of DCBS is used, so that even when the phenolic resin is compounded, the rise of the Mooney viscosity is effectively suppressed to facilitate the milling operation but also an appropriate Mooney scorch time can be maintained. Also, the use of the retarder such as CTP possibly causing the deterioration of rubber properties after the vulcanization and problems such as blooming and the like is not required, so that there is no fear of badly affecting the appearance and adhesiveness of the vulcanized rubber. Therefore, there can be obtained a rubber composition which effectively prevents

the deterioration of fracture resistance of rubber to reduce the occurrence of rubber burning as far as possible while maintaining the good workability and has a high elasticity.

Therefore, the rubber composition according to the invention can be preferably applied as a bead filler rubber or a side-reinforcing rubber for a run-flat tire.

[Best mode for carrying out the invention]

The invention will be concretely described below.

The rubber composition of the invention is characterized by comprising a rubber component, a sulfenamide-based vulcanization accelerator represented by the following formula (I), a phenolic resin, a methylene donor and sulfur.

[Chemical 2]

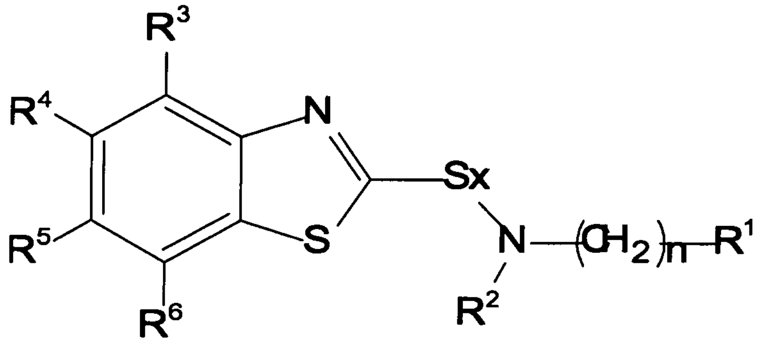

···(I)

The rubber component used in the invention is not particularly limited as long as it is used in rubber articles such as tire, industrial belt and so on. The rubber component having a double bond in its main chain is crosslinkable with sulfur and effectively functions the sulfenamide-based vulcanization accelerator represented by the formula (I). For example, natural rubber or synthetic rubbers are used. As the synthetic rubber are concretely mentioned polyisoprene rubber, styrene-butadiene copolymer, polybutadiene rubber, ethylene-propylene-diene terpolymer, chloroprene rubber, halogenated butyl rubber, acrylonitrile-butadiene rubber and the like.

The rubber component is preferable to comprise at least one of natural rubber and polyisoprene rubber in view of the adhesiveness to a metal reinforcing member such as steel cord or the like. Further, it is desirable to contain not less than 50 mass% of natural rubber in 100 mass% of the rubber component from a viewpoint of the durability of industrial belt rubber. The upper limit is not particularly limited, and may be 100 mass%. Moreover, the remainder is synthetic rubber, which is desirable to contain at least one of the aforementioned synthetic rubbers.

The sulfenamide-based vulcanization accelerator of the formula (I) used in the invention has a retarding effect equal to that of the conventional sulfenamide-based vulcanization accelerator represented by the following formula (X) being DCBS, and effectively suppresses the rise of the Mooney viscosity and can ensure a favorable Mooney scorch time. Also, it is excellent in the adhesion durability during direct vulcanization adhesion to the metal reinforcing member such as steel cords or the like and can be favorably used in a rubber composition for coating a thick rubber product or the like.

[Chemical 3]

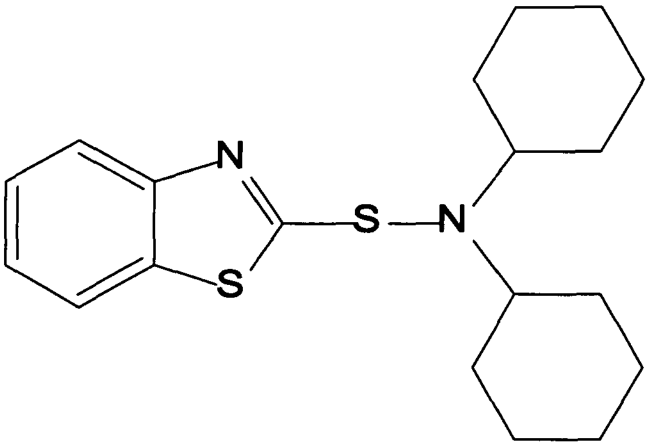

$\cdots$ (X)

In the invention, $R^1$ in the sulfenamide-based vulcanization accelerator represented by the formula (I) is a branched alkyl group having a carbon number of 3-12. When $R^1$ is a branched alkyl group having a carbon number of 3-12, the vulcanization acceleration performance of the sulfenamide-based vulcanization accelerator is good but also the adhesion performance can be enhanced.

As $R^1$ are concretely mentioned isopropyl group, isobutyl group, triisobutyl group, sec-butyl group, tert-butyl group, isoamyl group (isopentyl group), neopentyl group, tert-amyl group (tert-pentyl group), isohexyl group, tert-hexyl group, isoheptyl group, tert-heptyl group, isooctyl group, tert-octyl group, isononyl group, tert-nonyl group, isodecyl group, tert-decyl group, isoundecyl group, tert-undecyl group, isododecyl group, tert-dodecyl group and so on. Among them, a branched alkyl group having a branching at α-site, i.e. tert-alkyl group having a carbon number of 3-12 is preferable in view of the effect for providing a suitable Mooney scorch time or the like, and particularly tert-butyl group, tert-amyl group (tert-pentyl group), tert-dodecyl group and triisobutyl group are preferable, and tert-butyl group is most preferable from a viewpoint of balancedly developing the improvement of adhesiveness and the vulcanization rate equal to that of DCBS.

In the sulfenamide-based vulcanization accelerator of the formula (I), n is 0 or 1, and is preferable to be 0 in view of the effects such as easiness of synthesis, starting material cost and the like. Also, x in the formula (I) is an integer of 1 or 2. If x is 3 or more, the reactivity is too high, and hence the stability of the sulfenamide-based vulcanization accelerator lowers and there is a fear of deteriorating the workability.

This is guessed due to the fact that the presence of a bulky group in the vicinity of -N- adjacent to $R^1$ tends to provide a good Mooney scorch time. Therefore, it is considered that the compound of the formula (I) wherein $R^1$ is tert-butyl group and n is 0 becomes more bulky in the vicinity of -N- as compared with DCBS wherein $R^1$ is cyclohexyl group and n is 0, and can give a more favorable Mooney scorch time. Further, the bulkiness of the substituent located in the vicinity of -N- is properly controlled together with $R^2$ as mentioned later, whereby the preferable vulcanization rate and the good adhesiveness can be developed balancedly while considering accumulation to a human body.

In the invention, $R^2$ in the sulfenamide-based vulcanization accelerator of the formula (I) is a straight alkyl group having a carbon number of 1-10 or a branched alkyl group having a carbon number of 3-10. When $R^2$ is a straight alkyl group having a carbon number of 1-10 or a branched alkyl group having a carbon number of 3-10, the vulcanization acceleration performance of the sulfenamide-based vulcanization accelerator is good but also the adhesion performance can be enhanced.

As $R^2$ are concretely mentioned methyl group, ethyl group, n-propyl group, isopropyl group, n-butyl group, isobutyl group, sec-butyl group (1-methylpropyl group), tert-butyl group, n-amyl group (n-pentyl group), sec-amyl group (1-methylbutyl group), isoamyl group (isopentyl group), neopentyl group, tert-amyl group (tert-pentyl group), 1-methylpentyl group, n-hexyl group, isohexyl group, n-heptyl group, isoheptyl group, n-octyl group, iso-octyl group, nonyl group, isononyl group, decyl group, undecyl group, dodecyl group and so on. Among them, when $R^2$ is the straight alkyl group, the carbon number of 1-4 is preferable, the carbon number of 1-3 is more preferable, and the carbon number of 1-2 is most preferable from a viewpoint of the effects such as easiness of synthesis, starting material cost and the like and the consideration on accumulation to human body. On the other hand, when $R^2$ is the branched alkyl group, from a viewpoint of balancedly developing the favorable vulcanization rate and the good adhesiveness and a viewpoint of maintaining a proper concentrating property, a branched alkyl group having a branching at α-site, i.e. a branched alkyl group branched at a carbon atom of α-site bonding to nitrogen atom and having a carbon number of 3-10, more preferably 3-6 is preferable, which includes concretely isopropyl group, sec-butyl group, 1-methylpentyl group and the like. By properly selecting the $R^1$ and $R^2$ can be effectively controlled the bulkiness of the substituent located in the vicinity of -N- to balancedly develop

the favorable vulcanization rate and the good adhesiveness while considering the accumulation to a human body.

If $R^2$ of the formula (I) is H as in the conventional sulfenamide-based vulcanization accelerator, there is fear that the vulcanization rate is too fast but also there is a tendency that the good adhesiveness is not obtained. Also, when $R^2$ is a bulky group such as cyclohexyl group or a long-chain group being outside the above range as in the conventional sulfenamide-based vulcanization accelerator, the vulcanization rate conversely tends to be too late.

Particularly, when $R^1$ is tert-butyl group and n is 0, as an optimum branched alkyl group among $R^2$s having the above carbon number are more concretely mentioned isopropyl group and sec-butyl group from a viewpoint of balancedly developing the effect of holding the improvement of adhesiveness and the vulcanization rate equal to that of DCBS.

Moreover, when $R^1$ is tert-butyl group and n is 0, as $R^2$ having the above carbon number is particularly preferable the straight alkyl group than the branched alkyl group. As the optimum straight alkyl group are mentioned methyl group and ethyl group from a viewpoint of balancedly developing the improvement of adhesiveness and the holding of the vulcanization rate equal to that of DCBS and a viewpoint of considering the accumulation to a human body. If both of $R^1$ and $R^2$ are branched alkyl groups, the stability after the production tends to be deteriorated, while if each of $R^1$ and $R^2$ is tert-butyl group, the synthesis can not be conducted.

Moreover, when $R^1$ in the sulfenamide-based vulcanization accelerator of the formula (I) is a functional group (e.g. n-octadecyl group or the like) other than the branched alkyl group having a carbon number of 3-12 or a branched alkyl group having a carbon number of more than 12, or when $R^2$ is a functional group (e.g. n-octadecyl group or the like) other than the straight or branched alkyl group having a carbon number of 1-10 or a straight or branched alkyl group having a carbon number of more than 10, or further when n is not less than 2, the effects aiming at the invention can not be developed sufficiently, and there is a fear that the Mooney scorch time becomes slower outside the preferable range and the vulcanization time becomes longer beyond necessity, whereby the productivity and adhesiveness are deteriorated or the vulcanization performance as the accelerator or rubber performances are deteriorated.

In the formula (I), $R^3$-$R^6$ are independently a hydrogen atom, a straight alkyl group or alkoxy group having a carbon number of 1-4 or a branched alkyl group or alkoxy group having a carbon number of 3-4 and may be same or different. Particularly, $R^3$ and $R^5$ are preferable to be a straight alkyl group or alkoxy group having a carbon number of 1-4 or a branched alkyl group or alkoxy group having a carbon number of 3-4. Also, when each of $R^3$-$R^6$ is an alkyl group or alkoxy group having a carbon number of 1-4, the carbon number of 1 is preferable. It is preferable that all of $R^3$-$R^6$ are H. These preferable cases are desirable in a point that the synthesis of the compound is easy and the vulcanization rate becomes not slow. As a concrete example of $R^3$-$R^6$ in the formula (I) are mentioned methyl group, ethyl group, n-propyl group, isopropyl group, n-butyl group, isobutyl group, sec-butyl group, tert-butyl group, methoxy group, ethoxy group, n-propoxy group, isopropoxy group, n-butoxy group, isobutoxy group, sec-butoxy group, tert-butoxy group and so on.

Also, a log Pow value (distribution coefficient of 1-octanol/water) of the above sulfenamide-based vulcanization accelerator is preferable to become smaller in view of holding a proper concentrating property. Concretely, as the carbon number of $R^1$ and $R^2$ in the formula (I) becomes smaller, the log Pow value tends to be smaller. For example, when $R^1$ in the formula (I) used in the invention is t-butyl group and n is 0, it is desirable that $R^2$ in the formula (I) is a straight alkyl group having a carbon number of 1-4, more preferably 1-3, most preferable 1-2 from a viewpoint that the good adhesion performance is developed while maintaining the vulcanization rate equal to DCBS being the conventional sulfenamide-based vulcanization accelerator and the accumulation to a human body is considered.

Moreover, the log Pow value (distribution coefficient of 1-octanol/water) is generally a value obtained by one of simple measuring methods for evaluating a concentrating property of a chemical substance, which means a value obtained from a concentration ratio Pow of a chemical substance at two phases when the chemical substance is added to two solvent phases of 1-octanol and water to render into an equilibrium state. Pow is represented by the following equation, and a logarithm value of Pow is the log Pow value.

$$\mathrm{Pow} = \mathrm{Co}/\mathrm{Cw}$$

Co: concentration of chemical substance in 1-octanol
Cw: concentration of chemical substance in water

The log Pow value can be determined by measuring Pow according to JIS Z7260-117 (2006) using a high-performance liquid chromatography.

As a typical example of the sulfenamide-based vulcanization accelerator used in the invention are mentioned N-methyl-N-t-butylbenzothiazole-2-sulfenamide (BMBS), N-ethyl-N-t-butylbenzothiazol-2-sulfenamide (BEBS), N-n-propyl-N-t-butylbenzothiazole-2-sulfenamide, N-isopropyl-N-t-butylbenzothiazole-2-sulfenamide, N-n-butyl-N-t-butylbenzothiazole-2-sulfenamide (BBBS), N-isobutyl-N-t-butylbenzothiazole-2-sulfenamide, N-sec-butyl-N-t-butylbenzothiazole-2-sulfenamide, N-methyl-N-isoamylbenzothiazole-2-sulfenamide, N-ethyl-N-isoamylbenzothiazole-2-sulfenamide, N-n-propyl-N-isoamylbenzothiazole-2-sulfenamide, N-isopropyl-N-isoamylbenzothiazole-2-sulfenamide, N-n-butyl-N-isoamylbenzothiazole-2-sulfenamide, N-isobutyl-N-isoamylbenzothiazole-2-sulfenamide, N-sec-butyl-N-isoamylbenzothiazole-2-sulfenamide, N-methyl-N-tert-amylbenzothiazole-2-sulfenamide, N-ethyl-N-tert-amylbenzothiazole-2-sulfenamide, N-n-propyl-N-tert-amylbenzothiazole-2-sulfenamide, N-isopropyl-N-tert-amylbenzothiazole-2-sulfenamide, N-n-butyl-N-tert-amylbenzothiazole-2-sulfenamide, N-isobutyl-N-tert-amylbenzothiazole-2-sulfenamide, N-sec-butyl-N-tert-amylbenzothiazole-2-sulfenamide, N-methyl-N-tert-heptylbenzothiazole-2-sulfenamide, N-ethyl-N-tert-heptylbenzothiazole-2-sulfenamide, N-n-propyl-N-tert-heptylbenzothiazole-2-sulfenamide, N-isopropyl-N-tert-heptylbenzothiazole-2-sulfenamide, N-n-butyl-N-tert-heptylbenzothiazole-2-sulfenamide, N-isobutyl-N-tert-heptylbenzothiazole-2-sulfenamide, N-sec-butyl-N-tert-heptylbenzothiazole-2-sulfenamide;

N-methyl-N-t-butyl-4-methylbenzothiazole-2-sulfenamide, N-methyl-N-t-butyl-4,6-dimethoxybenzothiazole-2-sulfenamide, N-ethyl-N-t-butyl-4-methylbenzothiazole-2-sulfenamide, N-ethyl-N-t-butyl-4,6-dimethoxybenzothiazole-2-sulfenamide, N-n-propyl-N-t-butyl-4-methylbenzothiazole-2-sulfenamide, N-n-propyl-N-t-butyl-4,6-dimethoxybenzothiazole-2-sulfenamide, N-isopropyl-N-t-butyl-4-methylbenzothiazole-2-sulfenamide, N-isopropyl-N-t-butyl-4,6-dimethoxybenzothiazole-2-sulfenamide, N-n-butyl-N-t-butyl-4-methylbenzothiazole-2-sulfenamide, N-n-butyl-N-t-butyl-4,6-dimethoxybenzothiazole-2-sulfenamide, N-isobutyl-N-t-butyl-4-methylbenzothiazole-2-sulfenamide, N-isobutyl-N-t-butyl-4,6-dimethoxybenzothiazole-2-sulfenamide, N-sec-butyl-N-t-butyl-4-methylbenzothiazole-2-sulfenamide, N-sec-butyl-N-t-butyl-4,6-dimethoxybenzothiazole-2-sulfenamide and so on. They may be used alone or in a combination of two or more.

Among them, N-methyl-N-t-butylbenzothiazole-2-sulfenamide (BMBS), N-ethyl-N-t-butylbenzothiazole-2-sulfenamide (BEBS), N-n-propyl-N-t-butylbemzothiazole-2-sulfenamide, N-isopropyl-N-t-butylbenzothiazole-2-sulfenamide, N-isobutyl-N-t-butylbenzothiazole-2-sulfenamide and N-sec-butyl-N-t-butylbenzothiazole-2-sulfenamide are preferable in view of the improvement of adhesiveness, and N-methyl-N-t-butylbenzothiazole-2-sulfenamide (BMBS), N-ethyl-N-t-butylbenzothiazole-2-sulfenamide (BEBS), N-isopropyl-N-t-butylbenzothiazole-2-sulfenamide and N-sec-butyl-N-t-butylbenzothiazole-2-sulfenamide are most preferable.

Particularly, N-methyl-N-t-butylbenzothiazole-2-sulfenamide (BMBS) and N-ethyl-N-t-butylbenzothiazole-2-sulfenamide (BEBS) are optimum in a point that they have a longest Mooney scorch time and an excellent adhesion performance.

These sulfenamide-based vulcanizxation accelerators may be used in a combination with a general-purpose vulcanization accelerator such as N-tert-butyl-2-benzothiazole sulfenamide (TBBS), N-cyclohexyl-2-benzothiazole sulfenamide (CBS), dibenzothiazolyl disulfide (MBTS) or the like.

The content of the sulfenamide-based vulcanization accelerator is 0.1-10 parts by mass, preferably 0.3-5 parts by mass, more preferably 0.5-2.5 parts by mass per 100 parts by mass of the rubber component. When the content of the vulcanization accelerator is less than 0.1 part by mass, there is a fear that sufficient vulcanization is not obtained, while when it exceeds 10 parts by mass, the blooming becomes a problem.

As a method of producing the sulfenamide-based vulcanization accelerator may be preferably mentioned the following method.

That is, N-chloroamine previously prepared by the reaction of the corresponding amine with sodium hypochlorite is reacted with bis(benzothiazole-2-yl)disulfide in a proper solvent in the presence of an amine and a base. When the amine is used as a base, neutralization is conducted to return to a free amine, and thereafter the resulting reaction mixture is subjected to a proper posttreatment such as filtration, washing with water, concentration, recrystallization or the like in accordance with the nature of the reaction mixture to obtain a target sulfenamide.

As the base used in this method are mentioned starting amine used excessively, a tertiary amine such as triethylamine or the like, an alkali hydroxide, an alkali carbonate, an alkali bicarbonate, an sodium alkoxide and so on. Particularly, it is desirable to use a method wherein the reaction is conducted by using the excessive starting amine as a base or using triethylamine as a tertiary amine and the resulting hydrochloride is neutralized with sodium hydroxide and an amine is recycled from a filtrate after the recovery of the target substance.

As the solvent used in this method is desirable an alcohol, and particularly methanol is desirable.

As to N-ethyl-N-t-butylbenzothiazole-2-sulfenamide (BEBS), for example, an aqueous solution of sodium hypochlorite is added dropwise to N-t-butylethylamine below 0°C and stirred for 2 hours to dispense an oil layer. Then, bis(benzothiazole-2-yl)disulfide, N-t-butylethylamine and the above oil layer are suspended into methanol and stirred under reflux for 2 hours. After the cooling, the mixture is neutralized with sodium hydroxide, filtered, washed with water, concentrated under a reduced pressure and then recrystallized, whereby there can be obtained a target BEBS (white solid).

The phenolic resin used in the invention can increase the elasticity of rubber while suppressing the deterioration of fracture resistance of rubber. There are concretely mentioned, for example, a novolac type phenolic resin, a novolac type cresol resin, a novolac type xylenol resin, a novolac type resorcinol resin and an oil-modified resins thereof. At least one of these resins may be used.

As an oil used in the oil modification of the phenolic resin are mentioned rosin oil, tall oil, cashew nut oil, linoleic

acid, oleic acid and linolenic acid. At least one of these oils may be used.

The content of the phenolic resin is 2-40 parts by mass, preferably 5-30 parts by mass, more preferably 10-20 parts by mass per 100 parts by mass of the rubber component. When the content of the phenolic resin is less than 2 parts by mass, the effect of increasing the elasticity of the rubber composition is not developed sufficiently, while when it exceeds 40 parts by mass, there is a fear of damaging the flexibility of the rubber composition.

The methylene donor used in the invention serves as a curing agent for the phenolic resin and includes, for example, hexamethylene tetramine, a polyvalent methylol melamine derivative such as hexamethoxymethyl melamine or the like, an oxazolidine derivative, a polyvalent methylolated acetylene urea, acetoaldehyde ammonia, α-polyoxymethylene, paraformaldehyde and so on. It is preferable to use at least one of these substances. Particularly, hexamethylene tetramine and hexamethoxymethyl melamine are preferable in a point that the curing rate is fast and a rubber composition having a higher elasticity is obtained.

The content of the methylene donor is usually 5-80 mass%, preferably 30-60 mass% in 100 mass% in total of the phenolic resin and the methylene donor. When the content of the methylene donor is less than 5 mass%, the curing of the phenolic resin is not promoted sufficient, while when it exceeds 80 mass%, the crosslinking system of rubber may be badly affected.

Sulfur used in the invention serves as a vulcanizing agent, and the content thereof is 0.3-10 parts by mass, preferably 1.0-7.0 parts by mass, more preferably 3.0-7.0 parts by mass per 100 parts by mass of the rubber component. When the content of sulfur is less than 0.3 part by mass, there is a fear that sufficient vulcanization is not attained, while when it exceeds 10 parts by mass, there is a fear that the aging performance of rubber is deteriorated.

Further, the rubber composition is preferable to further contain a cobalt-based component made of cobalt element and/or a cobalt-containing compound in view of the improvement of initial adhesion performance. As the cobalt-based component are mentioned cobalt element but also a cobalt salt of an organic acid as a cobalt-containing compound, at least one of cobalt chloride, cobalt sulfate, cobalt nitrate, cobalt phosphate, cobalt chromate as a cobalt salt of an inorganic acid. Particularly, the cobalt salt of the organic acid is desirable in view of further improvement of initial adhesion performance. The cobalt element and cobalt-containing compounds may be used alone or in a combination of two or more.

As the cobalt salt of the organic acid may be concretely mentioned, for example, at least one of cobalt naphthenate, cobalt stearate, cobalt neodecanoate, cobalt rosinate, cobaly versatate, cobalt tallolate and so on. Also, the cobalt salt of the organic acid may be a composite salt formed by replacing a part of the organic acid with boric acid, and may include commercially available product "Manobond", made by OMG or the like concretely.

The content (in total) of the cobalt-based component is preferably 0.03-3 parts by mass, more preferably 0.03-1 part by mass as a cobalt quantity per 100 parts by mass of the rubber component.
When the cobalt content is less than 0.03 part by mass, the adhesiveness can not be further developed, while when it exceeds 3 parts by mass, the aging properties are largely deteriorated.

In the rubber composition according to the invention, additives usually used in rubber articles such as tire, conveyor belt and the like may be used within a range not obstructing the effects of the invention in addition to the aforementioned rubber component, vulcanization accelerator, phenolic resin, methylene donor, sulfur and cobalt-based component.

For example, when using a reinforcing filler, the fracture resistance, wear resistance and the like can be more improved. Concretely, there is mentioned carbon black or white inorganic filling materials.

As the carbon black are mentioned channel black, furnace black, acetylene black, thermal black and the like depending on the production methods, all of which may be used. For example, SRF, GPF, FEF, HAF, ISAF, SAF and so on may be mentioned. However, carbon black having an iodine adsorption (IA) of not less than 60 mg/g and dibutyl phthalate absorption (DBP) of not less than 80 ml/100 g is preferable.

On the other hand, as a white inorganic filler are preferable silica and substances represented by the following general formula (Y):

$$mM_1 \cdot xSiO_y \cdot zH_2O \qquad (Y)$$

(in the formula (Y), $M_1$ is at least one selected from a metal selected from the group consisting of aluminum, magnesium, titanium and calcium, and an oxide or a hydroxide of these metal and hydrates thereof, and m, x, y and z are an integer of 1-5, an integer of 0-10, an integer of 2-5 and an integer of 0-10, respectively). Further, it may contain a metal such as potassium, sodium, iron, magnesium or the like, an element such as fluorine or the like, and $NH_4$- group or the like.

Concretely, there may be exemplified alumina monohydrate ($Al_2O_3 \cdot H_2O$), aluminum hydroxide [$Al(OH)_3$] such as gibbsite, bayerite or the like, magnesium hydroxide [$Mg(OH)_2$], magnesium oxide (MgO), talc ($3MgO \cdot 4SiO_2 \cdot H_2O$), attapulgite ($5MgO \cdot 8SiO_2 \cdot 9H_2O$), titanium white ($TiO_2$), titanium black ($TiO_{2n-1}$), calcium oxide (CaO), calcium hydroxide [$Ca(OH)_2$], aluminum magnesium oxide ($MgO \cdot Al_2O_3$), clay ($Al_2O_3 \cdot 2SiO_2$), kaolin ($Al_2O_3 \cdot 2SiO_2 \cdot 2H_2O$), pyrophyllite ($Al_2O_3 \cdot 4SiO_2 \cdot H_2O$), bentonite ($Al_2O_3 \cdot 4SiO_2 \cdot 2H_2O$), aluminum silicate ($Al_2SiO_5$, $Al_4 \cdot 3SiO_4 \cdot 5H_2O$, and so on), magnesium silicate ($Mg_2SiO_4$, $MgSiO_3$, and so on), calcium silicate ($Ca_2SiO_4$, and so on), aluminum calcium silicate

($Al_2O_3 \cdot CaO \cdot 2SiO_2$, and so on), magnesium calcium silicate ($CaMgSiO_4$), various zeolites, feldspar, mica, montmorillonite and so on. In the above formula, $M_1$ is preferable to be aluminum, and aluminas and clays are particularly preferable.

The aluminas are represented by the following general formula (Z) among the compounds of the above general formula (Y):

$$Al_2O_3 \cdot nH_2O \text{ (wherein n is 0-3)} \qquad (Z)$$

The clays include clay ($Al_2O_3 \cdot 2SiO_2$), kaolin ($Al_2O_3 \cdot 2SiO_2 \cdot 2H_2O$), pyrophyllite ($Al_2O_3 \cdot 4SiO_2 \cdot H_2O$), bentonite ($Al_2O_3 \cdot 4SiO_2 \cdot 2H_2O$), montmorillonite and the like.

Among these white inorganic fillers, silica and aluminum hydroxide are preferable, and silica is particularly preferable. Silica can be properly selected from ones conventionally and commonly used for rubber reinforcement, for example, wet-type silica (silicic hydrate), dry-type silica (silicic anhydride), various silicates and the like, and among them silica synthesized by precipitation process (wet-type silica) is preferable.

The reinforcing filler can be compounded in an amount of 10-120 parts by mass, preferably 20-100 parts by mass per 100 parts by mass of the rubber component.

Furthermore, when the white inorganic filler such as silica or the like is used as the reinforcing filler, a coupling agent may be compounded, if desired. The coupling agent is not particularly limited, and may be used by arbitrarily selecting from the conventionally known various coupling agents, but a silane-based coupling agent is particularly preferable. As an example of the silane-based coupling agent are mentioned bis(3-triethoxysilylpropyl) tetrasulfide, bis(3-trimethoxysilylpropyl) tetrasulfide, bis(3-methyldimethoxysilylpropyl) tetrasulfide, bis(3-triethoxysilylethyl) tetrasulfide, bis(3-triethoxysilylpropyl) disulfide, bis(3-trimethoxysilylpropyl) disulfide, bis(3-triethoxysilylpropyl) trisulfide, 3-mercaptopropyltrimethoxy silane, 3-mercaptopropyltriethoxy siliane, vinyltriethoxy silane, vinyltrimethoxy silane, 3-aminopropyltriethoxy silane, 3-aminopropyltrimethoxy silane, 3-mercaptopropylmethyldimethoxy silane, γ-glycidoxypropyltrimethoxy silane, γ-glycidoxypropylmethldiethoxy silane, 3-trimethoxysiylylpropyl-N,N-dimethylcarbamoyl tetrasulfide, 3-trimethoxysilylpropylbenzothiazolyl tetrasulfide, 3-trimethoxysilylpropylmethacryloyl monosulfide and so on.

The above coupling agents may be used alone or in a combination of two or more. The amount compounded is 1-20 mass%, preferably 5-20 mass% per the white inorganic filler considering the compounding effect and economic reasons.

As a compounding agent other than the above are mentioned, for example, a softening agent, an antioxidant and the like. They may be properly compounded in accordance with the applications.

The rubber composition according to the invention can be produced, for example, by milling the above components in a Banbury mixer, kneader or the like. Also, when a tire for passenger car, truck, bus, motorcycle or the like is produced by using the rubber composition according to the invention, a bead filler member or a side-reinforcing rubber for a run-flat tire may be prepared, or it can be carried out by laminating these members with the other member on a building drum to prepare a green tire, placing the green tire in a tire mold and then vulcanizing while applying a pressure from an inside. Moreover, nitrogen or an inert gas may be filled into an interior of the tire in addition to air. Further, the rubber composition according to the invention may be preferably used in rubber articles having a larger thickness such as tire tread, hose, belt conveyor and the like, rubber articles by direct vulcanization adhesion between rubber and metal, and so on.

[EXAMPLES]

The invention is concretely described with reference to the following examples below, but the invention is not limited to these examples.
Moreover, the log Pow value of each of the sulfenamide-based vulcanization accelerators is determined by measuring Pow according to JIS Z7260-117 (2006) with a high performance liquid chromatography as previously mentioned.

[Production Example 1: Synthesis of N-methyl-N-t-butylbenzothiazole-2-sulfenamide (vulcanization accelerator 1)]

To 14.1 g of N-t-butylmethylamine (0.162 mol) is added 148 g of an aqueous solution of 12% sodium hypochlorite dropwise below 0°C, which is stirred for 2 hours to batch off an oil layer. The oil layer, 39.8 g (0.120 mol) of bis(benzothiazole-2-yl) disulfide and 24.3 g (0.240 mol) of N-t-butylmethylamine are suspended in 120 ml of methanol, which are stirred under reflux for 2 hours. After the cooling, the reaction mixture is neutralized with 6.6 g (0.166 mol) of sodium hydroxide, filtered, washed with water, concentrated under a reduced pressure and then recrystallized to obtain 46.8 g (yield: 82%) of a target BMBS as a white solid (melting point of 56-58°C, log Pow value of 4.5).

$^1$H-NMR (400 MHz, $CDCl_3$) δ = 1.32 (9H, s, $CH_3$ (t-butyl)), 3.02 (3H, s, $CH_3$ (methyl)), 7.24 (1H, m), 7.38 (1H, m), 7.77 (1H, m), 7.79 (1H, m)

$^{13}$C-NMR (100 MHz, CDCl3) δ = 27.3, 41.9, 59.2, 120.9, 121.4, 123.3, 125.7, 135.0, 155.5, 180.8,
Mass analysis (EI, 70 eV): m/z; 252 ($M^+$), 237 ($M^+$-$CH_3$), 223 ($M^+$-$C_2H_6$), 195 ($M^+$-$C_4H_9$), 167 ($M^+$-$C_5H_{12}N$), 86 ($M^+$-$C_7H_4NS_2$)

[Production Example 2: Synthesis of N-ethyl-N-t-butylbenzothiazole-2-sulfenamide (BEBS, vulcanization accelerator 2)]

The same procedure as in Production Example 1 is carried out except that 16.4 g (0.162 mol) of N-t-butylethylamine is used instead of N-t-butylmethylamine to obtain 41.9 g (yield: 66%) of BEBS as a white solid (melting point of 60-61 °C, log Pow value of 4.9).
The spectral data of the resulting BEBS are shown as follows.
$^1$H-NMR (400 MHz, $CDCl_3$) δ = 1.29 (t, 3H, J=7.1 Hz, $CH_3$ (methyl)), 1.34 (s, 9H, $CH_3$ (t-butyl)), 2.9-3.4 (br-d, $CH_2$), 7.23 (1H, m), 7.37 (1H, m), 7.75 (1H, m), 7.78 (1H, m)
$^{13}$C-NMR (100 MHz, $CDCl_3$) δ = 15.12, 28.06, 47.08, 60.41, 120.70, 121.26, 123.23, 125.64, 134.75, 154.93, 182.63
Mass analysis (EI, 70 eV): m/z; 251 ($M^+$-$CH_4$), 167 ($M^+$-$C_6H_{14}N$), 100 ($M^+$-$C_7H_5NS_2$): IR (KBr, $cm^{-1}$): 3061, 2975, 2932, 2868, 1461, 1429, 1393, 1366, 1352, 1309, 1273, 1238, 1198, 1103, 1022, 1011, 936, 895, 756, 727

[Production Example 3: Synthesis of N-n-propyl-N-t-butylbenzothiazole-2-sulfenamide (vulcanization accelerator 3)]

The same manner as in Production Example 1 is carried out except that 18.7 g (0.162 mol) of N-n-propyl-t-butylamine is used instead of N-t-butylmethylamine to obtain N-n-propyl-N-t-butylbenzothiazole-2-sulfenamide as a white solid (melting point of 50-52°C, log Pow value of 5.3).
$^1$H-NMR (400 MHz, $CDCl_3$) δ = 0.92 (t, J=7.3 Hz, 3H), 1.34 (s, 9H), 1.75 (br, 2H), 3.03 (brd, 2H), 7.24 (t, J=7.0 Hz, 1H), 7.38 (t, J=7.0 Hz, 1H), 7.77 (d, J=7.5 Hz, 1H), 7.79 (d, J=7.5 Hz, 1H)
$^{13}$C-NMR (100 MHz, $CDCl_3$) δ = 11.7, 23.0, 28.1, 55.3, 60.4, 120.7, 121.3, 123.3, 125.7, 134.7, 154.8, 181.3

[Production Example 4: Synthesis of N-i-propyl-N-t-butylbenzothiazole-2-sulfenamide (vulcanization accelerator 4)]

The same manner as in Production Example 1 is carried out except that 18.7 g (0.162 mol) of N-i-propyl-t-butylamine is used instead of N-t-butylmethylamine to obtain N-i-propyl-N-t-butylbenzothiazole-2-sulfenamide as a white solid (melting point of 68-70°C, log Pow value of 5.1).
$^1$H-NMR (400 MHz, $CDCl_3$) δ = 1.20-1.25 (dd, (1.22 ppm: J=6.4 Hz, 1.23 ppm: J=6.4 Hz) 6H), 1.37 (s, 9H), 3.78 (m, J=6.3 Hz, 1H), 7.23 (t, J=7.0 Hz, 1H), 7.38 (t, J=7.0 Hz, 1H), 7.77 (d, J=7.5 Hz, 1H), 7.79 (d, J=7.5 Hz, 1H)
$^{13}$C-NMR (100 MHz, $CDCl_3$) δ = 22.3, 23.9, 29.1, 50.6, 61.4, 120.6, 121.2, 123.2, 125.6, 134.5, 154.5, 183.3

[Production Example 5: Synthesis of N,N-di-i-propylbenzothiazole-2-sulfenamide (vulcanization accelerator 5)]

The same manner as in Production Example 1 is carried out except that 16.4 g (0.162 mol) of N-di-i-propylamine is used instead of N-t-butylmethylamine to obtain N,N-di-i-propylbenzothiazole-2-sulfenamide as a white solid (melting point of 57-59°C).
$^1$H-NMR (400 MHz, $CDCl_3$) δ = 1.26 (d, J=6.5 Hz, 12H), 3.49 (dq, J=6.5 Hz, 2H), 7.24 (t, J=7.0 Hz, 1H), 7.37 (t, J=7.0 Hz, 1H), 7.75 (d, J=8.6 Hz, 1H), 7.79 (d, J=8.6 Hz, 1H)
$^{13}$C-NMR (100 MHz, $CDCl_3$) δ = 21.7, 22.5, 55.7, 120.8, 121.3, 123.4, 125.7, 134.7, 155.1, 182.2
Mass analysis (EI, 70 eV): m/z; 266 ($M^+$), 251 ($M^+$-15), 218 ($M^+$-48), 209 ($M^+$-57), 182 ($M^+$-84), 167 ($M^+$-99), 148 ($M^+$-118), 100 ($M^+$-166: base)

[Production Example 6: Synthesis of N-n-butyl-N-t-butylbenzothiazole-2-sulfenamide (vulcanization accelerator 6)]

The same manner as in Production Example 1 is carried out except that 20.9 g (0.162 mol) of N-t-butyl-n-butylamine is used instead of N-t-butylmethylamine to obtain 42.4 g (yield: 60%) of BBBS as a white solid (melting point of 55-56°C, log Pow value of 5.8).
$^1$H-NMR (400 MHz, $CDCl_3$) δ = 0.89 (3H, t, J=7.32 Hz, $CH_3$ (n-Bu)), 1.2-1.4 (s+m, 11H, $CH_3$ (t-butyl) +$CH_2$ (n-butyl)), 1.70 (br, s, 2H, $CH_2$), 2.9-3.2 (br, d, 2H, N-$CH_2$), 7.23 (1H, m), 7.37 (1H, m), 7.75 (1H, m), 7.78 (1H, m)
$^{13}$C-NMR (100 MHz, $CDCl_3$) δ = 14.0, 20.4, 27.9, 31.8, 53.0, 60.3, 120.6, 121.1, 123.1, 125.5, 134.6, 154.8, 181.2
Mass analysis (EI, 70 eV): m/z; 294 ($M^+$), 279 ($M^+$-$CH_3$), 237 ($M^+$-$C_4H_9$), 167 ($M^+$-$C_8H_{18}N$), 128 ($M^+$-$C_7H_4NS_2$): IR (neat): 1707 $cm^{-1}$, 3302 $cm^{-1}$

[Examples 1-9]

An unvulcanized rubber composition is prepared by milling and mixing a rubber component, a vulcanization accelerator obtained in the above production example, a phenolic resin, a methylene donor, sulfur and other compounding agents according to a compounding recipe shown in Table 1 in a Banbury mixer of 2200 ml, and then the Mooney viscosity and Mooney scorch time are measured by the following method and the tensile test and test for dynamic storage modulus are conducted and evaluated by the following methods. The results are shown in Table 1.

Comparative Example 1]

A rubber composition is prepared in the same manner as in Example 1 except that the conventional vulcanization accelerator (DCBS) is used and the phenolic resin and methylene donor are not compounded, and then evaluated. The results are shown in Table 2.

[Comparative Examples 2-5]

A rubber composition is prepared in the same manner as in Example 1 except that the conventional vulcanization accelerator (DCBS) is used, and then evaluated. The results are shown in Table 2.

[Examples 10-11]

A rubber composition is prepared and evaluated according to the compounding amounts of Example 2 except that the amount of the vulcanization accelerator compounded in Example 2 is changed. The results are shown in Table 2.

[Examples 12-13]

A rubber composition is prepared and evaluated according to the compounding amounts of Example 2 except that a blend of natural rubber and SBR (styrene-butadiene rubber) is used as a rubber component. The results are shown in Table 3.

[Examples 14-16, Comparative Examples 6-7]

A rubber composition is prepared and evaluated according to a compounding recipe shown in Table 4 by properly compounding natural rubber and BR (butadiene rubber) or SBR (styrene-butadiene rubber) as a rubber component. The results are shown in Table 4.

[Examples 18-21, Comparative Examples 8-9]

A rubber composition is prepared and evaluated according to a compounding recipe shown in Table 5 by properly compounding natural rubber and BR (butadiene rubber) or SBR (styrene-butadiene rubber) as a rubber component and further compounding a cobalt-based component. The results are shown in Table 5.

<Evaluation method of Mooney viscosity and Mooney scorch time> It is carried out according to JIS K6300-1:2001.

Moreover, the evaluation is represented by an index on the basis that the value of Comparative Example 1 is 100. The smaller the index value of the Mooney viscosity, the better the workability in the milling, while the larger the index value of the Mooney scorch time, the better the workability in the milling.

<Evaluation method on tensile test>

A sample of JIS No. 3 dumbbell form is prepared from the resulting rubber composition, and then the tensile test is conducted at 25°C according to JIS K6251:2004 to measure elongation at break (Eb), tensile strength at break (Tb) and tensile stress at 50% elongation (M50), which are represented by an index on the basis that each value of the rubber composition of Comparative Example 1 is 100. The larger the index value, the better the fracture resistance.

<Evaluation method of dynamic storage modulus (E')>

With respect to the vulcanized rubber composition is measured the dynamic storage modulus (E') at a measuring

temperature of 25°C using a spectrometer made by Toyo Seiki Co., Ltd., which is represented by an index on the basis that the E' value of the rubber composition of Comparative Example 1 is 100. The larger the index value, the higher the modulus of elasticity, which shows that the elasticity of the rubber composition is increased.

<Heat-resistant adhesiveness>

Three steel cords (outer diameter 0.5 mm x length 300 mm) plated with a brass (Cu: 63 mass%, Zn: 37 mass%) are aligned in parallel at an interval of 10 mm and coated with each of the rubber compositions from both up and down sides, which is vulcanized at 160°C for 20 minutes to prepare a sample.
As to the heat-resistance adhesiveness of each of the resulting samples, the sample is placed in a gear oven of 100°C for 15 days or 30 days according to ASTM-D-2229 and thereafter the steel cord is pulled out therefrom to visually observe a rubber-coated state, which is represented by 0-100% as an indication of heat-resistant adhesiveness. The larger the numerical value, the better the heat-resistant adhesiveness.
[Table 1]

| | | Example 1 | Example 2 | Example 3 | Example 4 | Example 5 | Example 6 | Example 7 | Example 8 | Example 9 |
|---|---|---|---|---|---|---|---|---|---|---|
| Natural rubber | | 100 | 100 | 100 | 100 | 100 | 100 | 100 | 100 | 100 |
| Carbon black of HAF grade *1 | | 60 | 60 | 60 | 60 | 60 | 60 | 60 | 60 | 60 |
| Zinc oxide | | 5 | 5 | 5 | 5 | 5 | 5 | 5 | 5 | 5 |
| Antioxidant *2 | | 1 | 1 | 1 | 1 | 1 | 1 | 1 | 1 | 1 |
| Vulcanization accelerator A *3 | | | | | | | | | | |
| Sulfur | | 5 | 5 | 5 | 5 | 5 | 5 | 5 | 5 | 5 |
| Vulcanization accelerator 1 | | 1 | | | | | | | | |
| Vulcanization accelerator 2 | | | 1 | | | | | 1 | 1 | 1 |
| Vulcanization accelerator 3 | | | | 1 | | | | | | |
| Vulcanization accelerator 4 | | | | | 1 | | | | | |
| Vulcanization accelerator 5 | | | | | | 1 | | | | |
| Vulcanization accelerator 6 | | | | | | | 1 | | | |
| Hexamethoxymethyl melamine *9 | | 5 | 5 | 5 | 5 | 5 | 5 | 5 | 5 | |
| Hexamethylene tetramine *10 | | | | | | | | | | 5 |
| Novolac type phenolic resin *11 | | 10 | 10 | 10 | 10 | 10 | 10 | | | 10 |
| Cashew-modified phenolic resin *12 | | | | | | | | 10 | | |
| Tall-modified phenolic resin *13 | | | | | | | | | 10 | |
| Evaluation | | | | | | | | | | |
| Mooney viscosity ($ML_{1+4}$) | | 100 | 100 | 100 | 100 | 100 | 100 | 100 | 100 | 100 |
| Mooney scorch time ($T_s$) | | 63 | 66 | 66 | 69 | 67 | 66 | 70 | 101 | 60 |
| Tensile test results | Eb | 120 | 119 | 120 | 124 | 124 | 118 | 119 | 142 | 80 |
| | Tb | 100 | 103 | 100 | 98 | 101 | 98 | 100 | 96 | 92 |
| | M50 | 175 | 178 | 175 | 172 | 174 | 170 | 215 | 185 | 172 |

(continued)

| | Example 1 | Example 2 | Example 3 | Example 4 | Example 5 | Example 6 | Example 7 | Example 8 | Example 9 |
|---|---|---|---|---|---|---|---|---|---|
| Dynamic storage modulus (E') | 365 | 370 | 368 | 367 | 365 | 364 | 507 | 395 | 250 |
| The unit of the numerical value in each component of the rubber composition is part by mass. | | | | | | | | | |

[Table 2]

| | | Comparative Example 1 | Comparative Example 2 | Comparative Example 3 | Comparative Example 4 | Comparative Example 5 | Example 10 | Example 11 |
|---|---|---|---|---|---|---|---|---|
| Natural rubber | | 100 | 100 | 100 | 100 | 100 | 100 | 100 |
| Carbon black of HAF grade *1 | | 60 | 60 | 60 | 60 | 60 | 60 | 60 |
| Zinc oxide | | 5 | 5 | 5 | 5 | 5 | 5 | 5 |
| Antioxidant *2 | | 1 | 1 | 1 | 1 | 1 | 1 | 1 |
| Vulcanization accelerator A *3 | | 1 | 1 | 1 | 1 | 1 | | |
| Sulfur | | 5 | 5 | 5 | 5 | 5 | 5 | 5 |
| Vulcanization accelerator 1 | | | | | | | | |
| Vulcanization accelerator 2 | | | | | | | 0.8 | 1.2 |
| Vulcanization accelerator 3 | | | | | | | | |
| Vulcanization accelerator 4 | | | | | | | | |
| Vulcanization accelerator 5 | | | | | | | | |
| Vulcanization accelerator 6 | | | | | | | | |
| Hexamethoxymethyl melamine *9 | | | 5 | 5 | 5 | | 5 | 5 |
| Hexamethyl tetramine *10 | | | | | | 5 | | |
| Novolac type phenolic resin *11 | | | 10 | | | 10 | 10 | 10 |
| Cashew-modified phenolic resin *12 | | | | 10 | | | | |
| Tall-modified phenolic resin *13 | | | | | 10 | | | |
| Evaluation | | | | | | | | |
| Mooney viscosity ($ML_{1+4}$) | | 100 | 105 | 100 | 105 | 105 | 98 | 101 |
| Mooney scorch time ($t_s$) | | 100 | 60 | 65 | 94 | 53 | 71 | 62 |
| Tensile test results | Eb | 100 | 123 | 115 | 141 | 78 | 130 | 110 |
| | Tb | 100 | 98 | 99 | 97 | 90 | 106 | 100 |
| | M50 | 100 | 174 | 216 | 183 | 170 | 177 | 180 |

(continued)

| | Comparative Example 1 | Comparative Example 2 | Comparative Example 3 | Comparative Example 4 | Comparative Example 5 | Example 10 | Example 11 |
|---|---|---|---|---|---|---|---|
| Dynamic storage modulus (E') | 100 | 366 | 506 | 393 | 246 | 368 | 372 |
| The unit of the numerical value in each component of the rubber composition is part by mass. | | | | | | | |

[Table 3]

| | | Example 12 | Example 13 |
|---|---|---|---|
| Natural rubber | | 80 | 60 |
| SBR (styrene-butadiene rubber) | | 20 | 40 |
| Carbon black of HAF grade *1 | | 60 | 60 |
| Zinc oxide | | 5 | 5 |
| Antioxidant *2 | | 1 | 1 |
| Vulcanization accelerator A *3 | | | |
| Sulfur | | 5 | 5 |
| Vulcanization accelerator 1 | | | |
| Vulcanization accelerator 2 | | 1 | 1 |
| Vulcanization accelerator 3 | | | |
| Vulcanization accelerator 4 | | | |
| Vulcanization accelerator 5 | | | |
| Vulcanization accelerator 6 | | | |
| Hexamethoxymethyl melamine *9 | | 5 | 5 |
| Hexamethylene tetramine *10 | | | |
| Novolac type phenolic resin *11 | | 10 | 10 |
| Cashew-modified phenolic resin *12 | | | |
| Tall-modified phenolic resin *13 | | | |
| Evaluation | | | |
| Mooney viscosity ($ML_{1+4}$) | | 101 | 100 |
| Mooney scorch time ($t_s$) | | 70 | 72 |
| Tensile test results | Eb | 94 | 70 |
| | Tb | 88 | 80 |
| | M50 | 180 | 179 |
| Dynamic storage modulus (E') | | 372 | 374 |
| The unit of the numerical value in each component of the rubber composition is part by mass. | | | |

[Table 4]

| | Example 14 | Example 15 | Example 16 | Example 17 | Comparative Example 6 | Comparative Example 7 |
|---|---|---|---|---|---|---|
| Natural rubber | 100 | 100 | 90 | 90 | 90 | 90 |
| Butadiene rubber *7 | | | 10 | | 10 | 10 |
| Styrene-butadiene rubber *8 | | | | 10 | | |
| Carbon black of HAF grade *1 | 60 | 60 | 60 | 60 | 60 | 60 |

(continued)

| | | Example 14 | Example 15 | Example 16 | Example 17 | Comparative Example 6 | Comparative Example 7 |
|---|---|---|---|---|---|---|---|
| Zinc oxide | | 8 | 8 | 8 | 8 | 8 | 8 |
| Antioxidant *2 | | 2 | 2 | 2 | 2 | 2 | 2 |
| Vulcanization accelerator A *3 | | | | | | | |
| Vulcanization accelerator B *4 | | 0.2 | | | | | |
| Vulcanization accelerator C *5 | | | 0.2 | | | | |
| Sulfur | | 5 | 5 | 5 | 5 | 5 | 5 |
| Vulcanization accelerator 1 | | | | | | | |
| Vulcanization accelerator 2 | | 0.8 | 0.8 | 1 | 1 | | |
| Vulcanization accelerator 3 | | | | | | | |
| Vulcanization accelerator 4 | | | | | | | |
| Vulcanization accelerator 5 | | | | | | | |
| Vulcanization accelerator 6 | | | | | | | |
| Hexamethoxymethyl melamine *9 | | 5 | 5 | 5 | 5 | 5 | 5 |
| Novolac type phenolic resin *10 | | 10 | 10 | 10 | 10 | 10 | 10 |
| Evaluation | | | | | | | |
| Mooney viscosity ($ML_{1+4}$) | | 100 | 99 | 100 | 98 | 99 | 98 |
| Mooney scorch time ($t_s$) | | 62 | 64 | 65 | 64 | 59 | 58 |
| Tensile test results | Eb | 115 | 114 | 110 | 109 | 110 | 108 |
| | Tb | 102 | 103 | 102 | 100 | 101 | 100 |
| | M50 | 175 | 177 | 170 | 175 | 170 | 174 |
| The unit of the numerical value in each component of the rubber composition is part by mass. | | | | | | | |

[Table 5]

| | Example 18 | Example 19 | Example 20 | Example 21 | Comparative Example 8 | Comparative Example 9 |
|---|---|---|---|---|---|---|
| Natural rubber | 100 | 100 | 90 | 90 | 90 | 90 |
| Butadiene rubber *7 | | | 10 | | 10 | |
| Styrene-butadiene rubber *8 | | | | 10 | | 10 |

(continued)

| | | Example 18 | Example 19 | Example 20 | Example 21 | Comparative Example 8 | Comparative Example 9 |
|---|---|---|---|---|---|---|---|
| Carbon black of HAF grade *1 | | 60 | 60 | 60 | 60 | 60 | 60 |
| Zinc oxide | | 8 | 8 | 8 | 8 | 8 | 8 |
| Antioxidant *2 | | 2 | 2 | 2 | 2 | 2 | 2 |
| Vulcanization accelerator A *3 | | | | | | | |
| Vulcanization accelerator B *4 | | | 0.2 | | | 1 | 1 |
| Sulfur | | 5 | 5 | 5 | 5 | 5 | 5 |
| Vulcanization accelerator 1 | | | | | | | |
| Vulcanization accelerator 2 | | 1 | 0.8 | 1 | 1 | | |
| Vulcanization accelerator 3 | | | | | | | |
| Vulcanization accelerator 4 | | | | | | | |
| Vulcanization accelerator 5 | | | | | | | |
| Vulcanization accelerator 6 | | | | | | | |
| Hexamethoxymethyl melamine *9 | | 5 | 5 | 5 | 5 | 5 | 5 |
| Novolac type phenolic resin *10 | | 10 | 10 | 10 | 10 | 10 | 10 |
| Aliphatic acid salt of cobalt *6 | | 1 | 1 | 1 | 1 | 1 | 1 |
| Evaluation | | | | | | | |
| Mooney viscosity ($ML_{1+4}$) | | 100 | 101 | 100 | 98 | 101 | 100 |
| Mooney scorch time ($t_s$) | | 65 | 63 | 65 | 64 | 50 | 50 |
| Tensile test results | Eb | 118 | 115 | 109 | 109 | 109 | 110 |
| | Tb | 102 | 102 | 100 | 100 | 102 | 101 |
| | M50 | 177 | 175 | 172 | 172 | 172 | 173 |
| Heat-resistant adhesiveness (%) | deterioration after 15 days | 90 | 85 | 80 | 80 | 60 | 60 |
| | deterioration after 30 days | 60 | 60 | 60 | 60 | 20 | 20 |
| The unit of the numerical value in each component of the rubber composition is part by mass. | | | | | | | |

*1: trade name: Seast 300, made by Tokai Carbon Co., Ltd. nitrogen adsorption specific surface area 84 $m^2$/g, DBP absorption 75 ml/100 g

*2: N-phenyl-N'-1,3-dimethylbutyl-p-phenylene diamine (Nocrac 6C, made by OUCHI SHINKO CHEMICAL INDUSTRIAL Co., Ltd.)

*3: N,N'-dicyclohexyl-2-benzothiazylsulfenamide (Nocceler DZ, made by OUCHI SHINKO CHEMICAL INDUSTRIAL Co., Ltd.)

*4: N-cyclohexyl-2-benzothiazylsulfenamide (Nocceler CZ, made by OUCHI SHINKO CHEMICAL INDUSTRIAL Co., Ltd.)

*5: N-t-butylbenzothiazole-2-sulfenamide (Nocceler NS, made by OUCHI SHINKO CHEMICAL INDUSTRIAL Co., Ltd.)
*6: trade name: Manobond C22.5, made by OMG Co., Ltd. cobalt content: 22.5 mass%
*7: BR01
*8: SBR # 1778
*9: CYREZ 964RPC (made by CYTEC Co., Ltd.)
*10: SUMILIGHTRESIN PR-50235 (made by Sumitomo Bakelite Co., Ltd.)

As seen from the results of Tables 1-3, Examples 1-13 comprising the above specified vulcanization accelerator, phenolic resin, methylene donor and sulfur hold the good workability, suppress the deterioration of elongation at break, tensile strength at break and tensile stress at 50% elongation to prevent the deterioration of fracture resistance and develop the excellent high elasticity as compared with Comparative Example 1 containing the conventional vulcanization accelerator (DCBS) and sulfur but containing no phenolic resin and methylene donor.

Also, it has been understood that although Examples 1-6 and Comparative Example 2 contain the same phenolic resin and methylene donor in the same amounts, respectively, Examples 1-6 show a more favorable Mooney scorch time while effectively suppressing the rise of Mooney viscosity as compared with Comparative Example 2 using the conventional vulcanization accelerator (DCBS). Furthermore, it has been understood that the fracture resistance is substantially equal to or more than that of Comparative Example 2. This is clear from the comparisons between Example 7 and Comparative Example 3, between Example 8 and Comparative Example 4, and between Example 9 and Comparative Example 5, respectively.
In addition, as seen from the results of Tables 4-5, Examples 18-21 compounded with the cobalt-based component are excellent in the heat-resistance adhesiveness while maintaining the above good characteristics as compared with Examples 14-17.

Therefore, the rubber composition according to the invention comprises the specified vulcanization accelerator having a retarding effect equal to or more than that of DCBS and further the phenolic resin, methylene donor and sulfur, so that the workability and tensile properties are excellent and the occurrence of rubber burning can be reduced remarkably. Also, it is possible to more improve the adhesiveness by compounding the cobalt-based component.

## Claims

1. A rubber composition comprising a rubber component, a sulfenamide-based vulcanization accelerator represented by a formula (I), a phenolic resin, a methylene donor and sulfur:

[Chemical 1]

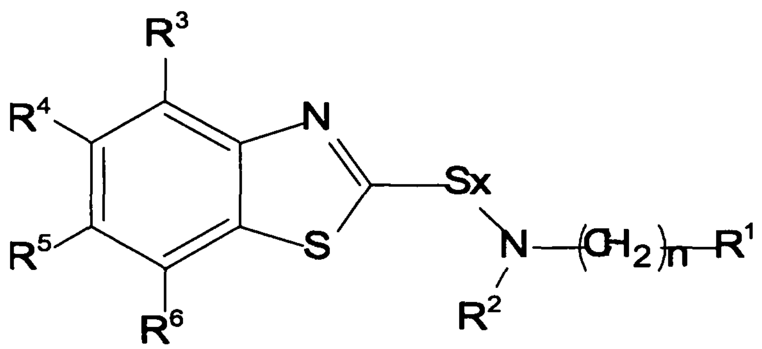

···(I)

(in the formula (I), $R^1$ is a branched alkyl group having a carbon number of 3-12, $R^2$ is a straight alkyl group having a carbon number of 1-10 or a branched alkyl group having a carbon number of 3-10, $R^3$-$R^6$ are independently a hydrogen atom, a straight alkyl group or alkoxy group having a carbon number of 1-4 or a branched alkyl group or alkoxy group having a carbon number of 3-4 and may be same or different, and n is 0 or 1 , and x is 1 or 2).

2. A rubber composition according to claim 1, wherein the sulfenamide-based vulcanization accelerator is included in an amount of 0.1-10 parts by mass based on 100 parts by mass of the rubber component.

3. A rubber composition according to claim 1 or 2, wherein the phenolic resin is included in an amount of 2-40 parts by mass based on 100 parts by mass of the rubber component.

4. A rubber composition according to any one of claims 1-3,
wherein the methylene donor is included in an amount of 5-80 mass% in 100 mass% in total of the phenolic resin and methylene donor.

5. A rubber composition according to any one of claims 1-4,
wherein sulfur is included in an amount of 0.3-10 parts by mass based on 100 parts by mass of the rubber component.

6. A rubber composition according to any one of claims 1-5,
wherein $R^1$ and $R^2$ in the formula (I) are a branched alkyl group having a branching at $\alpha$-site.

7. A rubber composition according to any one of claims 1-6,
wherein in the formula (I), $R^1$ is tert-butyl group and n is 0.

8. A rubber composition according to any one of claims 1-7,
wherein in the formula (I), $R^1$ is tert-butyl group, $R^2$ is a straight alkyl group having a carbon number of 1-6 or a branched alkyl group having a carbon number of 3-6 and each of $R^3$-$R^6$ is a hydrogen atom.

9. A rubber composition according to any one of claims 1-8,
wherein in the formula (I), $R^1$ is tert-butyl group, $R^2$ is a straight alkyl group having a carbon number of 1-6 or a branched alkyl group having a carbon number of 3-6, each of $R^3$-$R^6$ is a hydrogen atom and n is 0.

10. A rubber composition according to any one of claims 1-9,
wherein in the formula (I), $R^1$ is tert-butyl group, $R^2$ is methyl group, ethyl group or n-propyl group, each of $R^3$-$R^6$ is a hydrogen atom and n is 0.

11. A rubber composition according to any one of claims 1-10,
wherein in the formula (I), $R^1$ is tert-butyl group, $R^2$ is ethyl group, each of $R^3$-$R^6$ is a hydrogen atom and n is 0.

12. A rubber composition according to any one of claims 1-11,
wherein the methylene donor is at least one selected from the group consisting of hexamethylene tetramine, hexamethoxymethyl melamine, paraformaldehyde, acetoaldehyde ammonia, $\alpha$-polyoxymethylene, a polyvalent methylol melamine derivative, an oxazolidine derivative and a polyvalent methylolated acetylene urea.

13. A rubber composition according to any one of claims 1-12,
wherein the phenolic resin is at least one selected from the group consisting of a novolac type phenolic resin, a novolac type cresol resin, a novolac type xylenol resin, a novolac type resorcinol resin and a resin obtained by modifying these resin with an oil.

14. A rubber composition according to claim 13, wherein the oil-modified resin is a resin modified with at least one oil selected from the group consisting of rosin oil, tall oil, cashew nut oil, linoleic acid, oleic acid and linolenic acid.

15. A rubber composition according to any one of claims 1-14,
wherein the rubber composition further contains a cobalt-based component made of cobalt element and/or a cobalt-containing compound.

16. A rubber composition according to claim 15, wherein a content of the cobalt-based component is 0.03-3 parts by mass as a cobalt quantity per 100 parts by mass of the rubber component.

17. A rubber composition according to claim 15 or 16, wherein the cobalt-containing compound is a cobalt salt of an organic acid.

18. A rubber composition according to any one of claims 1-17, wherein the rubber component comprises at least one of natural rubber and polyisoprene rubber.

19. A rubber composition according to claim 18, wherein not less than 50 mass% of natural rubber is included in 100

mass% of the rubber component.

## INTERNATIONAL SEARCH REPORT

International application No.
PCT/JP2009/064413

A. CLASSIFICATION OF SUBJECT MATTER
*C08L21/00*(2006.01)i, *C08K3/06*(2006.01)i, *C08K5/3477*(2006.01)i, *C08K5/46*(2006.01)i, *C08L61/06*(2006.01)i, *B60C1/00*(2006.01)n, *B60C15/06*(2006.01)n, *B60C17/00*(2006.01)n

According to International Patent Classification (IPC) or to both national classification and IPC

B. FIELDS SEARCHED

Minimum documentation searched (classification system followed by classification symbols)
C08L1/00-101/14, C08K3/00-13/08

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2009 |
| Kokai Jitsuyo Shinan Koho | 1971-2009 | Toroku Jitsuyo Shinan Koho | 1994-2009 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br><br>Y<br>A | JP 2008-38140 A (Sumitomo Rubber Industries, Ltd.),<br>21 February 2008 (21.02.2008),<br>claim 1; paragraphs [0024], [0025], [0034]<br>& US 2009/151844 A & EP 2009049 A1<br>& WO 2008/7562 A1 | 1-6,12-14, 18-19<br>7-10,15-17<br>11 |
| Y | JP 48-11214 B1 (Monsanto Co.),<br>11 April 1973 (11.04.1973),<br>example 1<br>& US 3658828 A & GB 1289407 A | 7-9 |
| Y | Wacker, C. D., New sulfenamide accelerators derived from 'safe' amines for the rubber and tire industry, IARC Scientific Publications, 1991, 105, 592-4 | 10 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 29 October, 2009 (29.10.09) | 10 November, 2009 (10.11.09) |

| Name and mailing address of the ISA/ | Authorized officer |
|---|---|
| Japanese Patent Office | |
| Facsimile No. | Telephone No. |

Form PCT/ISA/210 (second sheet) (April 2007)

**INTERNATIONAL SEARCH REPORT**

International application No.
PCT/JP2009/064413

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2001-226528 A (Bridgestone Corp.), 21 August 2001 (21.08.2001), paragraphs [0017], [0021] (Family: none) | 15-17 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2005290321 A